# FASCICULE DE BREVET EUROPEEN

(11) **EP 0 572 503 B1**
(45) Date de publication et mention de la délivrance du brevet: **20.12.1995**
(21) Numéro de dépôt: 92905806.3
(22) Date de dépôt: 13.02.1992
(51) Int. Cl.: B31F 5/00

(54) **FEUILLES DE PAPIER MULTICOUCHES PRESENTANT DES MARQUAGES ET PROCEDE POUR LEUR ELABORATION**
VERFAHREN ZUM PRÄGEN UND KASCHIEREN VON PAPIER, SOWIE ERHALTENES PRODUKT
PAPER SHEETS HAVING SEVERAL DISTINCT LAYERS WITH MARKINGS AND PROCESS FOR PRODUCING THEM

(30) Priorité: 20.02.1991 FR 9102003
(43) Date de publication de la demande: 08.12.1993
(73) Titulaire: KAYSERSBERG, F-68240 Kaysersberg (FR)
(72) Inventeur: RUPPEL, Rémy, F-68320 Durrenentzen (FR); LAURENT, Pierre, F-68000 Colmar (FR); HUNGLER, Joel, F-68320 Urschenheim (FR)
(74) Mandataire: David, Daniel
(86) Numéro de dépôt international: FR9200137
(87) Numéro de publication internationale: WO9214605

(56) Documents cités:
- EP-A- 0 265 298
- EP-A- 0 340 334
- EP-A- 0 408 248
- FR-A- 2 508 845
- GB-A- 646 735
- GB-A- 1 059 746
- GB-A- 1 420 139
- US-A- 3 134 980

## Description

La présente invention concerne de nouvelles feuilles de papier multicouches présentant des marquages ainsi qu'un procédé pour les élaborer.

Elle concerne, plus précisément, une feuille et un procédé selon le préambule des revendications 1 et 7.

Dans le domaine des papiers, notamment des papiers à usage domestique et sanitaire, on connaît de nombreux produits multicouches dans lesquels plusieurs feuilles de papier préalablement gaufrées sont associées pour former un stratifié. Dans ce type de produits, on cherche à allier des propriétés de douceur, pour avoir un contact agréable au toucher, et d'absorption avec de bonnes propriétés de résistance mécanique. D'une façon générale, ces produits sont obtenus en réunissant et en collant entre elles en des points discrets des feuilles de papier préalablement gaufrées.

Dans ce type de procédé, une première feuille préalablement gaufrée reçoit, par l'intermédiaire d'un dispositif encolleur, un adhésif sur l'extrémité des protubérances réalisées lors de l'opération de gaufrage, puis est amenée en contact avec une autre feuille, elle aussi préalablement gaufrée pour réaliser un collage entre ces deux feuilles en leurs points de contact.

Suivant la position relative des gaufrages des deux feuilles au moment où est réalisé le collage des deux feuilles, on peut réaliser, par ces techniques, essentiellement deux types d'assemblage : ainsi le brevet US 3 414 459 décrit un assemblage où les pointes des gaufrages se trouvent en vis-à-vis alors que le brevet US 3 867 225 décrit un assemblage où les pointes des gaufrages d'une feuille viennent s'intercaler entre celles de l'autre feuille.

Le procédé utilisé pour obtenir ce type de produit, du fait du recours à une opération de gaufrage, limite la gamme des motifs qui peuvent être imprimés dans le papier, puisque, pour limiter les pertes de résistance mécanique lors de ce gaufrage, ces systèmes ne peuvent utiliser que des gravures présentant des motifs arrondis et en tout cas dépourvus d'angles vifs. Il s'agit en effet d'éviter la rupture des fibres.

On a cherché, par ailleurs, à limiter la quantité de colle employée en particulier pour éviter les phénomènes de rigidification.

On a ainsi proposé des systèmes permettant de marquer et d'assembler deux feuilles sans recours à l'utilisation d'adhésif. Des produits résultant d'un tel procédé sont, par exemple, décrits dans le brevet US 4 281 243. Dans ce brevet, les deux feuilles réunies sont liées uniquement sur leurs bords. Ceci s'explique par le fait qu'il serait impossible de conserver la résistance mécanique de la feuille sur toute sa surface car, pour obtenir une liaison suffisante entre les feuilles, il faut recourir à des pressions intenses, par exemple à une opération de molletage.

Le brevet US 3 672 549 propose un procédé permettant de coller, en des points discrets, deux feuilles préalablement gaufrées. Si l'on se reporte à la figure 2 de ce brevet, représentant un dispositif pour la mise en oeuvre du procédé, on s'aperçoit que ce dispositif fait appel, pour réaliser le collage discret des deux feuilles, essentiellement à trois cylindres 27, 28 et 30. Deux de ces cylindres, 27 et 30, sont revêtus de caoutchouc et présentent des surfaces gravées, et le troisième 28 est en acier lisse. Le cylindre 27 qui coopère avec le dispositif encolleur réalise à la fois l'encollage et le marquage de la feuille 10. Le collage des deux feuilles 9 et 10 est réalisé lors du passage de ces deux feuilles entre les cylindres 28 et 30.

Dans ce système, notamment du fait du recours au cylindre à surface lisse 28, il risque de se produire un glissement de la feuille à la surface de ce cylindre. Un tel glissement peut être à l'origine d'irrégularités dans le motif final ou de rupture du papier.

Par ailleurs, un autre inconvénient de ce système est lié au fait que l'adhésif soit déposé sur la surface gravée et transféré ensuite sur le papier.

En effet, il est nécessaire, pour éviter le dessèchement de l'adhésif à la surface en caoutchouc et l'encrassement de celle-ci, d'avoir recours à une quantité relativement importante d'adhésif. Il s'ensuit qu'il n'est pas possible de réaliser des produits multicouches de faible grammage pour lesquels on réduit très fortement la quantité d'adhésif emporté.

Une autre limitation de ce système de marquage et collage des feuilles résulte de la protection relative des cylindres 27, 28 et 30. Le marquage du produit final n'est jamais fait symétriquement sur les deux faces externes du stratifié réalisé entre les feuilles 9 et 10, puisqu'au moment du collage entre les deux feuilles, un des marquages se trouve nécessairement à l'intérieur du stratifié constitué.

La demanderesse a maintenant trouvé un nouveau procédé permettant de varier à l'infini la forme des motifs qui peuvent être marqués sur les feuilles en permettant, en particulier, d'utiliser des motifs à angles vifs, sans risque de perte de résistance mécanique tout en optimisant la quantité de colle déposée de façon à trouver un bon compromis entre une liaison suffisante des deux feuilles et une rigidification minimale.

Par marquage on entend l'impression sans gaufrage des motifs qui peuvent être aussi bien des dessins complexes, tels que des fleurs, par exemple des fleurs de lotus, ou des ensembles de lignes discontinues représentant, par exemple, des vagues. Par le marquage il ne se forme aucune protubérance ou autre déformation en saillie par rapport au plan initial de la feuille.

Ainsi, un premier objet de l'invention est de fournir des feuilles de papier multicouches, en particulier des feuilles de papier crêpé de type ouate de cellulose, collées entre elles en des zones discrètes présentant des marquages sur leurs faces externes.

Un deuxième objet de l'invention est de proposer un procédé permettant de réaliser simultanément et de façon simple le marquage de motifs de forme quelconque, en particulier de motifs présentant des angles vifs et le collage des feuilles pour former un papier multicouche.

Selon l'invention une feuille multicouche de papier est composée d'au moins deux feuilles de papier crêpé collées entre elles en des zones discrètes, caractérisée en ce que les feuilles ne ménagent pas de cavités entre elles et présentent des motifs d'épaisseur réduite sur ses deux faces externes, lesdites zones discrètes d'encollage étant situées au niveau desdits motifs et obtenues par pincement des deux feuilles.

Le papier crêpé peut être de type ouate de cellulose.

Selon une caractéristique préférée, les motifs des deux faces peuvent être identiques ou différents.

Selon d'autres caractéristiques préférées, l'invention fournit un procédé pour élaborer des papiers multicouches de la présente invention.

D'autres buts de la présente invention apparaîtront plus clairement dans la description qui va suivre faite en référence aux dessins.

Dans les dessins :
- la figure 1 représente une coupe transversale d'une feuille de papier bicouche selon la présente invention ;
- la figure 2 représente un dispositif permettant de mettre en oeuvre l'invention ;

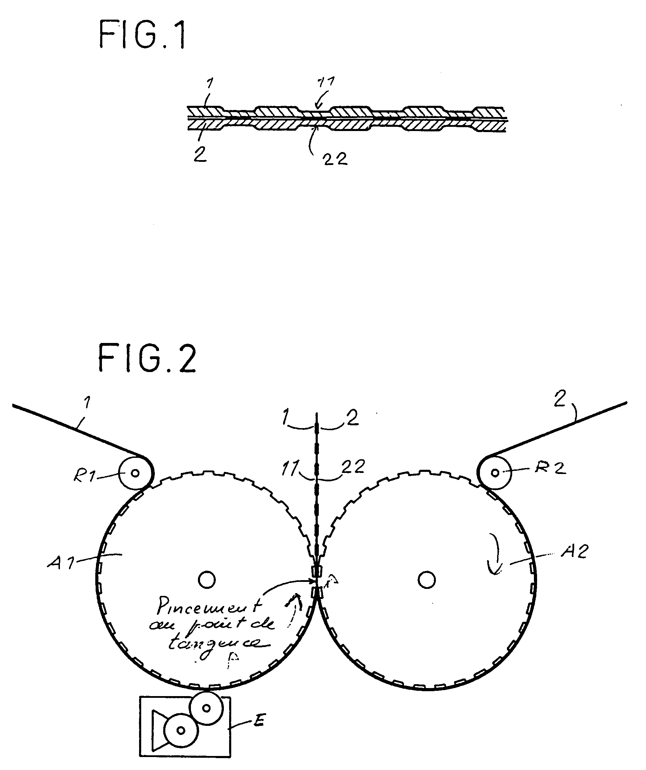

La figure 1 représente une feuille formée de deux couches de papier 1 et 2 collées entre elles en des zones discrètes 3. Chacune de ces couches présente une certaine épaisseur qui se trouve réduite au niveau où ces couches présentent des marquages 11, 22. Les zones d'encollage 3 coïncident avec les motifs 11 portés par la couche 1. Les zones de collage effectif pourront être plus étroites que les zones d'encollage si le motif de la feuille 2 est plus fin que celui de la feuille 1.

La figure 2 représente un dispositif permettant la réalisation de feuilles bicouches selon l'invention. Ce dispositif est composé de deux cylindres indéformables, par exemple en acier, notés A1 et A2, dont la surface porte des motifs gravés qui peuvent être de forme complexe.

Ces deux cylindres sont mis en rotation l'un par rapport à l'autre dans le sens indiqué par les flèches et tournent en synchronisme de façon que dans l'intervalle de pincement les zones en relief coïncident.

Dans le procédé selon l'invention, un premier pli est amené par l'intermédiaire d'un rouleau de distribution R1 en contact avec le cylindre A1. Ce pli épouse, sans subir de déformation, la surface du cylindre A1 et reçoit de la colle sur les zones portées par l'extrémité des protubérances lors de son passage entre le cylindre A1 et un dispositif d'encollage classique E. L'encolleur peut être constitué d'un premier cylindre plongeant dans une bâche contenant l'adhésif et d'un deuxième cylindre sur lequel l'adhésif est déposé par le premier cylindre. Le deuxième est au contact du pli 1 et dépose l'adhésif sur les extrémités des protubérances.

Un deuxième pli 2 est amené au contact de la surface du cylindre A2 par l'intermédiaire d'un rouleau de distribution R2.

Lors de la rotation des deux cylindres A1 et A2, les deux plis, dont le premier se trouve localement encollé, sont amenés en contact au niveau du point A où se trouvent réalisés, simultanément sous l'effet de la pression exercée entre les deux cylindres, le marquage du motif recherché et le collage des deux feuilles. Le procédé de la présente invention permet de marquer le papier de formes variées, ce qui n'était pas le cas avec les procédés recourant à un véritable gaufrage du papier qui limite nécessairement la forme des motifs imprimés dans le papier à des formes simples, en particulier ne présentant pas d'angles vifs.

Par ailleurs, la pression exercée entre les deux cylindres au niveau du point A est relativement faible et ne génère pas de risque de déchirure des feuilles. En effet, à vide, les cylindres ne sont pas en contact l'un de l'autre ou se touchent à peine. Il suffit que les deux cylindres se trouvent à une distance à peine inférieure à l'épaisseur des deux feuilles pour que l'impression et le collage soient réalisés simultanément. A titre d'exemple. les cylindres seront écartés d'une distance comprise entre 0,001 et 0,1 mm, par exemple 0,03 mm, pour une épaisseur de papier de 0,1 à 0,15 mm.

Dans la présente invention, la seule limitation concernant les motifs est liée à leur hauteur et à l'espacement des protubérances portées par le cylindre qui doit permettre un encollage correct de la feuille au niveau des protubérances sans que la portion de feuille entre les protubérances ne soit encollée. Il est, par ailleurs, apparu que la colle joue un effet favorable de lubrifiant dans le procédé de la présente invention. Un excès de la surface encollée dans la présente invention par rapport à la surface effectivement liée ne constituera pas nécessairement un inconvénient.

Pour éviter un encollage trop important, le dispositif d'encollage sera avantageusement disposé relativement près du point A, le contact entre le cylindre A1 et le dispositif encolleur E se faisant, de préférence, en un point situé sur le cylindre A1 à une distance du point A inférieure à un quart de cercle.

La demanderesse a, en particulier, mis en évidence que, pour avoir les qualités optimales de souplesse alliées à de bonnes propriétés de liaison entre deux feuilles, la gravure des cylindres A1 et A2 devrait être telle que, sur une feuille marquée selon le procédé de l'invention, on puisse inscrire entre deux motifs consécutifs un cercle de 1 cm de diamètre. Une autre caractéristique est que l'on puisse inscrire dans un carré de 1 dm² au moins vingt cercles de 1 cm de diamètre entre les motifs. Une autre caractéristique avantageuse est que la distance entre deux zones liées entre elles soit inférieure à 6 cm.

Comme on l'a dit précédemment, les deux cylindres peuvent présenter une gravure symétrique ou différente.

Par ailleurs, rien n'empêche de remplacer les plis 1 et 2 par des plis doubles ou triples.

## Revendications

1. Feuille multicouche de papier présentant des motifs formés par des zones d'épaisseur réduite, composée d'au moins deux feuilles de papier (1, 2) crêpé, collées entre elles en des zones discrètes (3), caractérisée en ce que les feuilles ne ménagent pas de cavités entre elles et que les motifs sont formés par des zones d'épaisseur réduite (11, 22) sur ses deux faces externes, lesdites zones discrètes d'encollage étant situées au niveau desdits motifs et obtenues par pincement des deux feuilles.

2. Feuille selon l'une des revendications 1, caractérisée en ce que les motifs portés par les deux feuilles sont identiques.

3. Feuille selon l'une des revendications 1 à 2, caractérisée en ce que les motifs portés par les deux feuilles sont différents.

4. Feuille selon l'une des revendications 1 à 3, caractérisée en ce que l'on peut inscrire entre deux motifs voisins un cercle de 1 cm de diamètre.

5. Feuille selon l'une des revendications 1 à 5, caractérisée en ce que l'on peut inscrire entre les motifs compris dans une feuille de 1 dm² au moins vingt cercles de 1 cm de diamètre.

6. Feuille selon l'une des revendications 1 à 5, caractérisée en ce que les zones collées sont séparées par une distance inférieure à 6 cm.

7. Procédé d'élaboration de papiers multicouches selon l'une des revendications 1 à 6, caractérisé en ce qu'il consiste à faire passer un premier pli (1) sur un premier cylindre indéformable (A1), portant des motifs gravés, à réaliser un encollage dudit pli au niveau desdits motifs puis à amener ce pli en contact avec un deuxième pli (2) passant autour d'un deuxième cylindre indéformable gravé (A2), le collage des deux plis et l'impression des motifs étant réalisés sous l'effet de la pression au point de contact (A) des deux cylindres (A1) et (A2) dont on règle la distance à cet effet.

## Claims

1. Multi-layer paper sheet having patterns formed of areas of reduced thickness, consisting of at least two sheets of crêpe paper (1,2), glued together in discrete areas (3), characterized in that the sheets do not have cavities between them and that the patterns are formed of areas of reduced thickness (11,22) on its two outer surfaces, the said discrete glued areas being situated on the said patterns and obtained by nipping the two sheets together.

2. Sheet according to claim 1, characterized in that the patterns carried by the two sheets are identical.

3. Sheet according to claim 1, characterized in that the patterns carried by the two sheets are different.

4. Sheet according to one of claims 1 to 3, characterized in that a 1 cm diameter circle can be inscribed between two adjacent patterns.

5. Sheet according to one of claims 1 to 3, characterized in that at least twenty 1 cm diameter circles can be inscribed between the patterns included within a 1 dm² sheet.

6. Sheet according to one of claims 1 to 5, characterized in that the glued areas are separated by a distance of less than 6 cm.

7. Process for the manufacture of multi-layer papers according to one of claims 1 to 6, characterized in that it consists of passing a first ply (1) over a first non-deformable cylinder (A1), bearing engraved patterns, gluing the said ply on the said patterns and bringing this ply into contact with a second ply (2) passing around a second non-deformable engraved cylinder (A2), the two plies being glued and the patterns being printed under the effect of pressure at the point of contact (A) between the two cylinders (A1) and (A2), the distance being adjusted for this purpose.

## Patentansprüche

1. Mehrschichtiges Blatt aus Papier mit von Zonen reduzierter Dicke gebildeten Motiven, welches aus zumindest zwei Blättern Kreppapier (1, 2) zusammengesetzt ist, die in diskreten Zonen (3) aneinandergeklebt sind, dadurch gekennzeichnet, daß die Blätter zwischen sich keine Hohlräume aufweisen und daß die Motive von Zonen reduzierter Dicke (11, 22) auf ihren beiden äußeren Seiten gebildet sind, wobei die diskreten Leimungszonen auf dem Niveau der Motive angeordnet und durch Quetschung der beiden Blätter erhalten sind.

2. Blatt gemäß Anspruch 1, dadurch gekennzeichnet, daß die von den beiden Blättern getragenen Motive identisch sind.

3. Blatt gemäß einem der Ansprüche 1 bis 2, dadurch gekennzeichnet, daß von die beiden Blättern getragenen Motive verschiedenen sind.

4. Blatt gemäß einem der Ansprüche 1 bis 3, dadurch gekennzeichnet, daß man zwischen zwei benachbarten Motive einen Kreis von 1 cm Durchmesser einschreiben kann.

5. Blatt gemäß einem der Ansprüche 1 bis 4, dadurch gekennzeichnet, daß man zwischen die auf einem Blatt von 1 dm² enthaltene Motive zumindest zwanzig Kreise von 1 cm Durchmesser einschreiben kann.

6. Blatt gemäß einem der Ansprüche 1 bis 5, dadurch gekennzeichnet, daß die Klebezonen durch einen Abstand von weniger als 6 cm getrennt sind.

7. Verfahren zum Herstellen von mehrschichtigen Papieren gemäß einem der Ansprüche 1 bis 6, dadurch gekennzeichnet, daß es darin besteht, eine erste Schicht (1) über einen ersten unverformbaren Zylinder (A1) hinweggehen zu lassen, der gravierte Motive hat, eine Leimung der Schicht auf dem Niveau der Motive durchzuführen, dann diese Schicht in Kontakt mit einer zweiten Schicht (2) zu bringen, die um einen zweiten unverformbaren gravierten Zylinder (A2) hergeht, wobei das Kleben der beiden Schichten und das Drucken der Motive unter der Wirkung des Druckes im Kontaktpunkt (A) der beiden Zylinder (A1) und (A2) ausgeführt wird, deren Abstand man zu diesem Zweck einstellt.
